(19) Europäisches Patentamt
European Patent Office
Office européen des brevets

(11) **EP 2 360 845 A1**

(12) **EUROPEAN PATENT APPLICATION**
published in accordance with Art. 153(4) EPC

(43) Date of publication:
24.08.2011 Bulletin 2011/34

(51) Int Cl.:
*H04B 1/707* (2011.01)    *H04L 25/02* (2006.01)
*H04L 25/03* (2006.01)

(21) Application number: 09827169.5

(22) Date of filing: 13.11.2009

(86) International application number:
**PCT/CN2009/074936**

(87) International publication number:
**WO 2010/057420 (27.05.2010 Gazette 2010/21)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 21.11.2008 CN 200810177558

(71) Applicant: **Huawei Technologies Co., Ltd.**
**Shenzhen, Guangdong 518129 (CN)**

(72) Inventor: **WANG, Xinsheng**
**Shenzhen**
**Guangdong 518129 (CN)**

(74) Representative: **Epping - Hermann - Fischer**
**Patentanwaltsgesellschaft mbH**
**Ridlerstrasse 55**
**80339 München (DE)**

(54) **METHOD AND DEVICE FOR JOINT CHANNEL ESTIMATION AND FRAME SYNCHRONIZATION INFORMATION DETECTION**

(57)     A method and a device for joint channel estimation and frame synchronization information detection are provided, which relates to the field of wireless communication. The method includes: shifting a received signal at least once in a preset range and based on a preset reference position; multiplying $\left(\mathbf{A}_t^H \mathbf{A}_t\right)^{-1} \mathbf{A}_t^H$ by the received signal and the shifted received signal respectively to obtain at least two groups of channel factors, where $\mathbf{A}_t$ is a matrix obtained by sequencing pilot segment information bits, $(\cdot)^H$ denotes a complex conjugate transpose, and $(\cdot)^{-1}$ denotes an inverse matrix; and calculating receiving antenna information according to the at least two groups of channel factors, determining frame synchronization information according to the receiving antenna information, and selecting a group of channel factors which corresponds to the frame synchronization information. The device includes a shifting module, a calculation module, and a selection module. Therefore, the frame synchronization information does not need to be known in advance, but is determined at the same time with the channel estimation, and the performance is desirable.

| Shift a received signal at least once in a preset range and based on a preset reference position | 101 |

↓

| Multiply calculated $\left(\mathbf{A}_t^H \mathbf{A}_t\right)^{-1} \mathbf{A}_t^H$ by the received signal and the shifted received signal respectively to obtain at least two groups of channel factors | 102 |

↓

| Calculate receiving antenna information according to the at least two groups of channel factors, determine frame synchronization information according to the receiving antenna information, and select a group of channel factors which corresponds to the frame synchronization information | 103 |

FIG. 1

EP 2 360 845 A1

**Description**

**FIELD OF THE INVENTION**

The present invention relates to the field of wireless communication, and in particular, to a method and a device for joint channel estimation and frame synchronization information detection.

**BACKGROUD OF THE INVENTION**

In a current wireless communication system, a joint channel detection technology is one of the featured solutions. Channel estimation is an important part of the joint detection technology, and the precision of the channel estimation directly affects an effect of the joint detection technology.

In the prior art, the correlation channel estimation and least squares channel estimation are used. The correlation channel estimation has a poor performance and a high bit error rate. Especially, for the joint detection, the performance of demodulation is greatly restrained. In process of the least squares channel estimation, frame synchronization information needs to be known in advance or frame synchronization needs to be completed in advance. In this method, frame synchronization is usually completed first by using the correlation channel estimation, and then the least squares channel estimation is adopted to estimate channel factors. However, in a scenario of multi-user reusing-one-slot (MUROS), the demodulation performance of users is restrained in both the methods. Especially, a performance floor might even occur due to different power biases of multiple users.

**SUMMARY OF THE INVENTION**

In order to improve the performance of channel estimation and obtain frame synchronization information, embodiments of the present invention provide a method and a device for joint channel estimation and frame synchronization information detection. Technical solutions are given in the following.

An embodiment provides a method for joint channel estimation and frame synchronization information detection, where the method includes:

shifting a received signal at least once in a preset range and based on a preset reference position;

multiplying calculated $\left( \mathbf{A}_t^H \mathbf{A}_t \right)^{-1} \mathbf{A}_t^H$ by the received signal and the shifted received signal respectively to obtain at least two groups of channel factors, where $\mathbf{A}_t$ is a matrix obtained by sequencing pilot segment information bits, $(\cdot)^H$ denotes a complex conjugate transpose, and $(\cdot)^{-1}$ denotes an inverse matrix; and

calculating receiving antenna information according to the at least two groups of channel factors, determining frame synchronization information according to the receiving antenna information, and selecting a group of channel factors which corresponds to the frame synchronization information.

An embodiment provides a system for joint channel estimation and frame synchronization information detection, where the system includes:

a shifting module, configured to shift a received signal at least once in a preset range and based on a preset reference position;

a calculation module, configured to multiply calculated $\left( \mathbf{A}_t^H \mathbf{A}_t \right)^{-1} \mathbf{A}_t^H$ by the received signal and the received signal shifted by the shifting module respectively to obtain at least two groups of channel factors, where $\mathbf{A}_t$ is a matrix obtained by sequencing pilot segment information bits, $(\cdot)^H$ denotes a complex conjugate transpose, and $(\cdot)^{-1}$ denotes an inverse matrix; and

a selection module, configured to calculate receiving antenna information according to the at least two groups of channel factors, determine frame synchronization information according to the receiving antenna information, and select a group of channel factors which corresponds to the frame synchronization information.

The beneficial effect of the solutions according to the embodiments of the present invention is as follows. The frame synchronization information does not need to be known in advance, but during channel estimation, the frame synchronization information and channel factors are determined at the same time. Furthermore, the performance of the joint detection that is performed by using the determined channel factors is better than that of the joint detection in the prior art.

## BRIEF DESCRIPTION OF THE DRAWINGS

FIG. 1 is a flow chart of a method for joint channel estimation and frame synchronization information detection according to Embodiment 1 of the present invention;

FIG. 2 is a schematic view of effect comparison between methods for joint channel estimation and frame synchronization information detection according to Embodiment 1 of the present invention and in the prior art; and

FIG. 3 is a structural schematic view of a device for joint channel estimation and frame synchronization information detection according to Embodiment 2 of the present invention.

## DETAILED DESCRIPTION OF THE EMBODIMENTS

In order to make the objectives, technical solutions, and advantages of the present invention more comprehensive, the embodiments of the present invention are described in detail with reference to the accompanying drawings.

## Embodiment 1

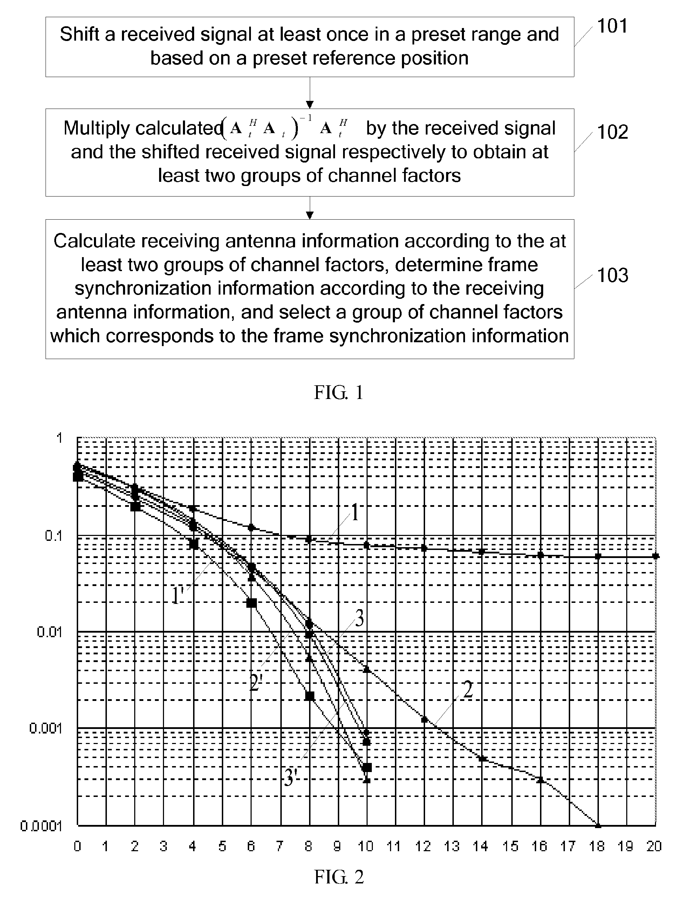

Referring to FIG. 1, an embodiment of the present invention provides a method for joint channel estimation and frame synchronization information detection. In this embodiment, a case of two users and two receiving antennas is taken as example for illustration. More users and more antennas are also possible.

The method includes the following blocks.

In block 101, a received signal is shifted at least once in a preset range and based on a preset reference position.

Specifically, $\mathbf{R}_t$ denotes the received signal in a pilot segment, $\mathbf{R}_t = \mathbf{A}_t\mathbf{h}+\mathbf{n}_t$, where $\mathbf{R}_t = \begin{bmatrix} \mathbf{R}_{t,0}^T & \mathbf{R}_{t,1}^T \end{bmatrix}^T$, $\mathbf{A}_t$ denotes a matrix obtained by sequencing pilot segment information bits, $\mathbf{A}_t = \begin{bmatrix} \mathbf{A}_{t,0} & \mathbf{0} & \mathbf{A}_{t+\Delta t,1} & \mathbf{0} \\ \mathbf{0} & \mathbf{A}_{t,0} & \mathbf{0} & \mathbf{A}_{t+\Delta t,1} \end{bmatrix}$, $\mathbf{h}$ denotes a channel impulse response, $\mathbf{h} = \begin{bmatrix} \mathbf{h}_{0,0}^T & \mathbf{h}_{1,0}^T & \mathbf{h}_{0,1}^T & \mathbf{h}_{1,1}^T \end{bmatrix}^T$, $\mathbf{n}_t$ is the White Gaussian Noise, $\mathbf{n}_t = \begin{bmatrix} \mathbf{n}_{t,0}^T & \mathbf{n}_{t,1}^T \end{bmatrix}^T$, and $(\cdot)^T$ denotes a transpose.

When the number of receiving antennas is M (M≥1) and the number of users is N (N≥1), the received signal can be expressed as $\mathbf{R}_t = \mathbf{A}_t\mathbf{h} + \mathbf{n}_t$, where:

$$\mathbf{R}_t = \begin{bmatrix} \mathbf{R}_{t,0}^T & \mathbf{R}_{t,1}^T & \cdots & \mathbf{R}_{t,M-1}^T \end{bmatrix}^T,$$

$$\mathbf{A}_t = \begin{bmatrix} \mathbf{A}_{t,0} & \mathbf{0} & \cdots & \mathbf{0} & \mathbf{A}_{t+\Delta t_1,1} & \mathbf{0} & \cdots & \mathbf{0} & \mathbf{A}_{t+\Delta t_{N-1},N-1} & \mathbf{0} & \cdots & \mathbf{0} \\ \mathbf{0} & \mathbf{A}_{t,0} & \cdots & \mathbf{0} & \mathbf{0} & \mathbf{A}_{t+\Delta t_1,1} & \cdots & \mathbf{0} & \mathbf{0} & \mathbf{A}_{t+\Delta t_{N-1},N-1} & \cdots & \mathbf{0} \\ & \vdots & \vdots & & & \vdots & \vdots & & & \vdots & \vdots \\ \mathbf{0} & \mathbf{0} & \cdots & \mathbf{A}_{t,0} & \mathbf{0} & \mathbf{0} & \cdots & \mathbf{A}_{t+\Delta t_1,1} & \mathbf{0} & \mathbf{0} & \cdots & \mathbf{A}_{t+\Delta t_{N-1},N-1} \end{bmatrix}_{M \times (M \times N)}$$

$$\mathbf{h} = \begin{bmatrix} \mathbf{h}_{0,0}^T & \mathbf{h}_{1,0}^T & \cdots & \mathbf{h}_{M-1,0}^T & \cdots & \mathbf{h}_{0,\ N-1}^T & \cdots & \mathbf{h}_{M-1,\ N-1}^T \end{bmatrix}^T,$$

$$\mathbf{n}_t = \begin{bmatrix} \mathbf{n}_{t,0}^T & \mathbf{n}_{t,1}^T & \cdots & \mathbf{n}_{t,M-1}^T \end{bmatrix}^T.$$

In the above equation, M is the number of receiving antennas, N is the number of users, $t+\Delta t$ is the arrival time, $\Delta t$ is a time difference between the arrival time of one user and that of another user, a time difference between the arrival time of the first user and that of the other users is the corresponding $\Delta t$, that is, a time difference between the arrival time of the second user and that of the first user is $\Delta t_1$, a time difference between the arrival time of the third user and that of the first user is $\Delta t_2$, ..., and a time difference between the arrival time of the nth user and that of the first user is $\Delta t_{N-1}$.

In the embodiment of the present invention, i denotes a preset shifting range. $i = -X, -(X-1), \cdots (Y-1)$, $Y$ indicates that the range in which the received signal shifts is [-X,Y]. For example, if the preset reference position of the received signal is i=0, when i=-X, the received signal is shifted to left by x positions; and when i=Y, the received signal is shifted to right by y positions.

In block 102, $\left(\mathbf{A}_t^H \mathbf{A}_t\right)^{-1} \mathbf{A}_t^H$ is calculated, and the calculated $\left(\mathbf{A}_t^H \mathbf{A}_t\right)^{-1} \mathbf{A}_t^H$ is multiplied by the received signal and the shifted received signal respectively to obtain at least two groups of channel factors.
Specifically,

$$\hat{\mathbf{h}}_{LS}^{'}(i) = \left(\mathbf{A}_t^{'H} \mathbf{A}_t^{'}\right)^{-1} \mathbf{A}_t^{'H} R_{t+i}^{'}, \quad i = -X, -(X-1), \cdots (Y-1), Y \qquad (1)$$

$\hat{\mathbf{h}}_{LS}^{'}(i)$ denotes the channel factor, $(\cdot)^H$ denotes a complex conjugate transpose, and $(\cdot)^{-1}$ denotes an inverse matrix. In the embodiment of the present invention, in the above example, (x+y+1) groups of channel factors can be obtained by using Equation (1). When $i = -X$, a group of channel factors is obtained; when $i = -(X-1)$, a group of channel factors is obtained; ...; when $i = (Y-1)$, a group of channel factors is obtained.
In block 103, receiving antenna information is calculated according to the at least two groups of channel factors, frame synchronization information is determined according to the receiving antenna information, and a group of channel factors which corresponds to the frame synchronization information is selected.
The calculating the receiving antenna information according to the at least two groups of channel factors, determining the frame synchronization information according to the receiving antenna information, and the selecting a group of channel factors which corresponds to the frame synchronization information include the following blocks.
At the shifted positions, signal-to-noise ratios (SNRs) on the receiving antennas are calculated according to the at least two groups of channel factors, the frame synchronization information is determined according to the SNRs on the receiving antennas, and a group of channel factors which corresponds to the frame synchronization information is selected.
At the shifted positions, the calculating the SNRs on the receiving antennas according to the at least two groups of channel factors and determining the frame synchronization information according to the SNRs on the receiving antennas include the following blocks.
At the shifted positions, a sum of SNRs on at least two receiving antennas of M receiving antennas is calculated according to the at least two groups of channel factors to obtain multiple sums of SNRs, where M≥2.
In the embodiment of the invention, since two users are taken as an example for illustration, the sum of SNRs on two receiving antennas is calculated at (X+Y+1) shifted positions respectively to obtain the (X+Y+1) sums of SNRs. The detailed calculation method is as follows.

$$Y_1 = \underset{i=-X,-(X-1),\cdots,Y}{\mathrm{MAX}} \left\{ \frac{\left|\hat{h}_{LS}^{(1)'}(i)\right|^2}{\sigma_1^2} + \frac{\left|\hat{h}_{LS}^{(2)'}(i)\right|^2}{\sigma_2^2} \right\} \qquad (2)$$

In Equation (2), $Y_1$ denotes the maximum sum of SNRs among the sums of SNRs on two receiving antennas at (X+Y+1) shifted positions. For example, when $i = -X$, the SNR on the first antenna and the SNR on the second antenna are added together to obtain the first sum of SNRs; when $i = -(X-1)$, the SNR on the first antenna and the SNR on the second antenna are added together to obtain the second sum of SNRs; ...; and when i=Y, the SNR on the first antenna and the SNR on the second antenna are added together to obtain the (X+Y+1)th sum of SNRs.
The shifted position corresponding to the maximum sum of SNRs among the multiple sums of SNRs is determined as the frame synchronization information.
In the above example, if the second sum of SNRs is the maximum sum of SNRs among the obtained (X+Y+1) sums of SNRs, as the shifted position corresponding to the second sum of SNRs is $i = -(X-1)$, $i = -(X-1)$ is determined as the frame synchronization information, and then the group of channel factors which corresponds to $i = -(X-1)$ is selected.
Alternatively, at the shifted positions, the calculating the SNRs on the receiving antennas according to the at least two groups of channel factors and determining the frame synchronization information according to the SNRs on the receiving antennas include the following blocks.
At the shifted positions, the SNRs on at least one receiving antenna of the M receiving antennas are calculated according to the at least two groups of channel factors to obtain multiple SNRs, where M≥1.

The shifted position corresponding to the maximum SNR among the multiple SNRs is determined as the frame synchronization information.

In this case, the sums of SNRs do not need to be calculated. It is only necessary to calculate, at the shifted positions, the SNRs on one or more receiving antennas of M receiving antennas according to the at least two groups of channel factors, and the shifted position corresponding to the maximum SNR is determined as the frame synchronization information.

Alternatively, the calculating receiving antenna information according to the at least two groups of channel factors, determining frame synchronization information according to the receiving antenna information, and selecting a group of channel factors which corresponds to the frame synchronization information include the following blocks.

At the shifted positions, an energy on the receiving antenna is calculated according to the at least two groups of channel factors, the frame synchronization information is determined according to the energy on the receiving antenna, and a group of channel factors which corresponds to the frame synchronization information is selected.

At the shifted positions, the calculating the energy on the receiving antennas according to the at least two groups of channel factors and determining the frame synchronization information according to the energy on the receiving antenna include the following blocks.

At the shifted positions, a sum of energies on at least two receiving antennas of M receiving antennas is calculated according to the at least two groups of channel factors to obtain multiple sums of energies, where $M \geq 2$.

In the embodiment of the invention, since two users are taken as an example for illustration, the sum of energies on two receiving antennas is calculated at (X+Y+1) shifted positions respectively to obtain (X+Y+1) sums of energies. The detailed calculation method is as follows.

$$Y_2 = \underset{i=-X,-(X-1),\cdots,Y}{\mathrm{MAX}} \left\{ \left| \hat{\mathrm{h}}_{\mathrm{LS}}^{(1)'}(\mathrm{i}) \right|^2 + \left| \hat{\mathrm{h}}_{\mathrm{LS}}^{(2)'}(\mathrm{i}) \right|^2 \right\} \tag{3}$$

In Equation (3), $Y_2$ denotes the maximum sum of energies among the sums of energies on two receiving antennas at (X+Y+1) shifted positions. For example, when $i = -X$, the energy on the first antenna and the energy on the second antenna are added together to obtain the first sum of energies; when $i = -(X-1)$, the energy on the first antenna and the energy on the second antenna are added together to obtain the second sum of energies; ...; and when i=Y, the energy on the first antenna and the energy on the second antenna are added together to obtain the (X+Y+1)th sum of energies.

The shifted position corresponding to the maximum sum of energies among the multiple sums of energies is determined as the frame synchronization information.

In the above example, if the second sum of energies is the maximum sum of energies among the obtained (X+Y+1) sums of energies, as the shifted position corresponding to the second sum of energies is $i = -(X-1)$, $i = -(X-1)$ is determined as the frame synchronization information, and then the group of channel factors which corresponds to $i$ = -(X-1) is selected.

Alternatively, at the shifted positions, the calculating the energy on the receiving antennas according to the at least two groups of channel factors and determining the frame synchronization information according to the energy on the receiving antenna include the following blocks.

At the shifted positions, the energy on at least one receiving antenna of M receiving antennas is calculated according to the at least two groups of channel factors to obtain multiple energies, where $M \geq 1$.

The shifted position corresponding to the maximum energy among the multiple energies is determined as the frame synchronization information.

In this case, the sums of energies do not need to be calculated. It is only necessary to calculate, at the shifted positions, the energy on one or more receiving antennas of M receiving antennas according to the at least two groups of channel factors, determine the shifted position corresponding to the maximum energy as the frame synchronization information, and select a group of channel factors which corresponds to the frame synchronization information.

The beneficial effect of the device according to the embodiment of the present invention is as follows. The frame synchronization information does not need to be known in advance when channel estimation and frame synchronization are performed at the same time, but during the channel estimation the frame synchronization information and the channel factors are determined at the same time, and the performance of the joint detection that is performed by using the determined channel factors is better than that of the joint detection in the prior art. Referring to FIG. 2, a performance curve 1, a performance curve 2, and a performance curve 3 indicate the performance in the prior art, and a performance curve 1', a performance curve 2', and a performance curve 3' indicate the performance of the present invention. The performance curves 1 and 1' indicate the effect comparison when the power bias is that a power of a user A is 10 db higher than a power of a user B, the performance curves 2 and 2' indicate the effect comparison without power bias, and the performance curves 3 and 3' indicate the effect comparison with when the power bias is that the power of the user A is 10 db lower than the power of the user B. As can be seen from FIG. 2, for the performance curves 1 and 2, although the Quality of Service (QoS) requirements are satisfied, the performance becomes poor, and the performance curve 3 is far from satisfying the QoS requirements.

**Embodiment 2**

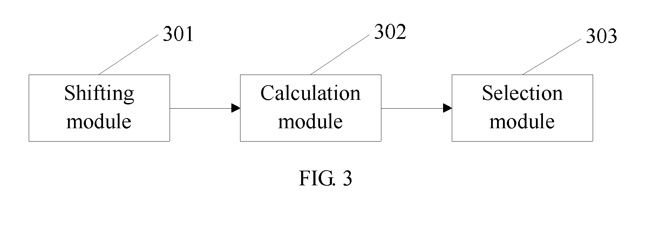

Referring to FIG. 3, an embodiment of the present invention provides a device for joint channel estimation and frame synchronization information detection. By using this device, a received signal is shifted at least once in a preset range and based on a preset reference position, calculated $\left( \mathbf{A}_t^H \mathbf{A}_t \right)^{-1} \mathbf{A}_t^H$ is multiplied by the received signal and the shifted received signal respectively to obtain at least two groups of channel factors, then frame synchronization information is determined according to the receiving antenna information, and a group of channel factors which corresponds to the frame synchronization information is selected.

In this embodiment, two users and two receiving antennas are used as an example for description. More users and more antennas are also possible.

The device includes a shifting module 301, a calculation module 302, and a selection module 303.

The shifting module 301 is configured to shift a received signal at least once in a preset range and based on a preset reference position.

Specifically, $\mathbf{R}_t$ denotes the received signal in the pilot segment, $\mathbf{R}_t = \mathbf{A}_t \mathbf{h} + \mathbf{n}_t$, where $\mathbf{R}_t = \begin{bmatrix} \mathbf{R}_{t,0}^T & \mathbf{R}_{t,1}^T \end{bmatrix}^T$, $\mathbf{A}_t$ denotes a matrix obtained by sequencing pilot segment information bits,

$$\mathbf{A}_t = \begin{bmatrix} \mathbf{A}_{t,0} & \mathbf{0} & \mathbf{A}_{t+\Delta t,1} & \mathbf{0} \\ \mathbf{0} & \mathbf{A}_{t,0} & \mathbf{0} & \mathbf{A}_{t+\Delta t,1} \end{bmatrix},$$

$\mathbf{h}$ denotes a channel impulse response, $\mathbf{h} = \begin{bmatrix} \mathbf{h}_{0,0}^T & \mathbf{h}_{1,0}^T & \mathbf{h}_{0,1}^T & \mathbf{h}_{1,1}^T \end{bmatrix}^T$, $\mathbf{n}_t$ is the White Gaussian Noise, $\mathbf{n}_t = \begin{bmatrix} \mathbf{n}_{t,0}^T & \mathbf{n}_{t,1}^T \end{bmatrix}^T$, and $\bullet^T$ denotes a transpose.

In this case, if the number of receiving antennas is M and the number of users is N, the received signal can be expressed as $\mathbf{R}_t = \mathbf{A}_t \mathbf{h} + \mathbf{n}_t$, where:

$$\mathbf{R}_t = \begin{bmatrix} \mathbf{R}_{t,0}^T & \mathbf{R}_{t,1}^T & \cdots & \mathbf{R}_{t,M-1}^T \end{bmatrix}^T,$$

$$\mathbf{A}_t = \begin{bmatrix} \mathbf{A}_{t,0} & \mathbf{0} & \cdots & \mathbf{0} & \mathbf{A}_{t+\Delta t_1,1} & \mathbf{0} & \cdots & \mathbf{0} & \mathbf{A}_{t+\Delta t_{N-1},N-1} & \mathbf{0} & \cdots & \mathbf{0} \\ \mathbf{0} & \mathbf{A}_{t,0} & \cdots & \mathbf{0} & \mathbf{0} & \mathbf{A}_{t+\Delta t_1,1} & \cdots & \mathbf{0} & \mathbf{0} & \mathbf{A}_{t+\Delta t_{N-1},N-1} & \cdots & \mathbf{0} \\ \vdots & \vdots & & & \vdots & \vdots & & & \vdots & \vdots & & \\ \mathbf{0} & \mathbf{0} & \cdots & \mathbf{A}_{t,0} & \mathbf{0} & \mathbf{0} & \cdots & \mathbf{A}_{t+\Delta t_1,1} & \mathbf{0} & \mathbf{0} & \cdots & \mathbf{A}_{t+\Delta t_{N-1},N-1} \end{bmatrix}_{M \times (M \times N)}$$

$$\mathbf{h} = \begin{bmatrix} \mathbf{h}_{0,0}^T & \mathbf{h}_{1,0}^T & \cdots & \mathbf{h}_{M-1,0}^T & \cdots & \mathbf{h}_{0,\ N-1}^T & \cdots & \mathbf{h}_{M-1,\ N-1}^T \end{bmatrix}^T,$$

$$\mathbf{n}_t = \begin{bmatrix} \mathbf{n}_{t,0}^T & \mathbf{n}_{t,1}^T & \cdots & \mathbf{n}_{t,M-1}^T \end{bmatrix}^T.$$

In the above equation, M is the number of receiving antennas (M≥1), N is the number of users (N≥1), $t+\Delta t$ is the arrival time, $\Delta t$ is a time difference between the arrival time of one user and that of another user, the time difference between the arrival time of the first user and that of other users is the corresponding $\Delta t$, that is, a time difference between the arrival time of the second user and that of the first user is $\Delta t_1$, the time difference between the arrival time of the third user and that of the first user is $\Delta t_2$,..., and the time difference between the arrival time of the nth user and that of the first user is $\Delta t_{N-1}$.

In the embodiment of the present invention, i denotes a preset shifting range. The equation $i = -X, -(X-1),... (Y-1)$, $Y$ indicates that the range in which the received signal shifts is [-X,Y]. For example, if the preset reference position of the received signal is i=0, when i=-X, the received signal is shifted to left by x positions; and when i=Y, the received signal is shifted to right by y positions.

The calculation module 302 is configured to calculate $\left(\mathbf{A}_t^H \mathbf{A}_t\right)^{-1} \mathbf{A}_t^H$ and multiply the calculated $\left(\mathbf{A}_t^H \mathbf{A}_t\right)^{-1} \mathbf{A}_t^H$ by the received signal and the received signal shifted by the shifting module 301 respectively to obtain at least two groups of channel factors, where $\mathbf{A}_t$ is a matrix obtained by sequencing pilot segment information bits.

Specifically,

$$\hat{\mathbf{h}}_{LS}'(i) = \left(\mathbf{A}_t'^H \mathbf{A}_t'\right)^{-1} \mathbf{A}_t'^H R_{t+i}', \quad i = -X, -(X-1), \cdots (Y-1), Y \qquad (4)$$

$\hat{\mathbf{h}}_{LS}'(i)$ denotes the channel factor, $(\cdot)^H$ denotes a complex conjugate transpose, and $(\cdot)^{-1}$ denotes an inverse matrix. In the embodiment of the present invention, in the above example, (x+y+1) groups of channel factors can be obtained by using Equation (4). When $i = -X$, a group of channel factors is obtained; when $i = -(X-1)$, a group of channel factors is obtained; ...; and when $i = Y-1$, a group of channel factors is obtained.

The selection module 303 is configured to calculate receiving antenna information according to the at least two groups of channel factors obtained by the calculation module 302, determine frame synchronization information according to the receiving antenna information, and select a group of channel factors which corresponds to the frame synchronization information.

The selection module 303 includes a first determination unit and a first selection unit.

The first determination unit is configured to, at the shifted positions, calculate SNRs on the receiving antennas according to the at least two groups of channel factors, and determine the frame synchronization information according to the SNRs on the receiving antennas.

The first selection unit is configured to select a group of channel factors which corresponds to the frame synchronization information determined by the first determination unit.

The first determination unit includes a first calculation subunit and a first determination subunit.

The first calculation subunit is configured to, at the shifted positions, calculate a sum of SNRs on at least two receiving antennas of M receiving antennas according to the at least two groups of channel factors to obtain multiple sums of SNRs, where M≥2.

In the embodiment of the invention, since two users are taken as an example for illustration, the sum of SNRs on two receiving antennas are calculated at (X+Y+1) shifted positions respectively to obtain the (X+Y+1) sums of SNRs. The detailed calculation method is as follows.

$$Y_1 = \underset{i=-X,-(X-1),\cdots,Y}{\mathrm{MAX}} \left\{ \frac{\left|\hat{h}_{LS}^{(1)'}(i)\right|^2}{\sigma_1^2} + \frac{\left|\hat{h}_{LS}^{(2)'}(i)\right|^2}{\sigma_2^2} \right\} \qquad (5)$$

In Equation (5), $Y_1$ denotes the maximum sum of SNRs among the sums of SNRs on two receiving antennas at (X+Y+1) shifted positions. For example, when $i = -X$, the SNR on the first antenna and the SNR on the second antenna are added together to obtain the first sum of SNRs; when $i = -(X-1)$, the SNR on the first antenna and the SNR on the second antenna are added together to obtain the second sum of SNRs; ...; and when i=Y, the SNR on the first antenna and the SNR on the second antenna are added together to obtain the (X+Y+1)th sum of SNRs.

The first determination subunit is configured to determine the shifted position corresponding to the maximum sum of SNRs among the multiple sums of SNRs obtained by the first calculation subunit as the frame synchronization information.

In the above example, if the second sum of SNRs is the maximum sum of SNRs among the obtained (X+Y+1) sums of SNRs, as the shifted position corresponding to the second sum of SNRs is $i = -(X-1)$, $i = -(X-1)$ is determined as the frame synchronization information, and then the group of channel factors which corresponds to $i = -(X-1)$ is selected.

Alternatively, the first determination unit includes a second calculation subunit and a second determination subunit.

The second calculation subunit is configured to, at the shifted positions, calculate the SNRs on at least one receiving antenna of M receiving antennas according to the at least two groups of channel factors to obtain multiple SNRs, where M≥1.

The second determination subunit is configured to determine the shifted position corresponding to the maximum SNR among the multiple SNRs obtained by the second calculation subunit as the frame synchronization information.

In this case, the sums of SNR do not need to be calculated. It is only necessary to calculate, at the shifted positions, the SNRs on one or more receiving antennas of M receiving antennas according to the at least two groups of channel factors, determine the shifted position corresponding to the maximum SNR as the frame synchronization information, and select a group of channel factors which corresponds to the frame synchronization information.

Alternatively, the selection module 303 includes a second determination unit and a second selection unit.

The second determination unit is configured to, at the shifted positions, calculate an energy on the receiving antennas according to the at least two groups of channel factors and determine the frame synchronization information according to the energy on the receiving antenna.

The second selection unit is configured to select a group of channel factors which corresponds to the frame synchronization information determined by the second determination unit.

The second determination unit includes a third calculation subunit and a third determination subunit.

The third calculation subunit is configured to, at the shifted positions, calculate a sum of energies on at least two receiving antennas of M receiving antennas according to the at least two groups of channel factors to obtain multiple sums of energies, where M≥2.

In the embodiment of the invention, since two users are taken as an example for illustration, the sum of energies on two receiving antennas is calculated at (X+Y+1) shifted positions respectively to obtain the (X+Y+1) sums of energies. The detailed calculation method is as follows.

$$Y_2 = \MAX_{i=-X,-(X-1),\cdots,Y} \left\{ \left| \hat{h}_{LS}^{(1)'}(i) \right|^2 + \left| \hat{h}_{LS}^{(2)'}(i) \right|^2 \right\} \tag{6}$$

In Equation (6), $Y_2$ denotes the maximum sum of energies among the sums of energies on two receiving antennas at (X+Y+1) shifted positions. For example, when $i = -X$, the energy on the first antenna and the energy on the second antenna are added together to obtain the first sum of energies; when $i = -(X-1)$, the energy on the first antenna and the energy on the second antenna are added together to obtain the second sum of energies; ...; and when i=Y, the energy on the first antenna and the energy on the second antenna are added together to obtain the (X+Y+1)th sum of energies.

The third determination subunit is configured to determine the shifted position corresponding to the maximum sum of energies among the multiple sums of energies obtained by the third calculation subunit as the frame synchronization information.

In the above example, if the second sum of energies is the maximum sum of energies among the obtained (X+Y+1) sums of energies, as the shifted position corresponding to the second sum of energies is $i = -(X-1)$, $i = -(X-1)$ is determined as the frame synchronization information, and then the group of channel factors which corresponds to $i = -(X-1)$ is selected.

Alternatively, the second determination unit includes a fourth calculation subunit and a fourth determination subunit.

The fourth calculation subunit is configured to, at the shifted positions, calculate the energy on at least one receiving antenna of M receiving antennas according to the at least two groups of channel factors to obtain multiple energies, where M≥1.

The fourth determination subunit is configured to determine the shifted position corresponding to the maximum energy among the multiple energies obtained by the fourth calculation subunit as the frame synchronization information.

In this case, the sums of energies do not need to be calculated. It is only necessary to calculate, at the shifted positions, the energy on one or more receiving antennas of M receiving antennas according to the at least two groups of channel factors, determine the shifted position corresponding to the maximum energy among the multiple energies as the frame synchronization information, and select a group of channel factors which corresponds to the frame synchronization information.

The beneficial effect of the device according to the embodiment of the present invention is as follows. The frame synchronization information does not need to be known in advance when the channel estimation and frame synchronization are performed at the same time, but the frame synchronization information and the channel factors are determined at the same time during the channel estimation, and the performance of the joint detection that is performed by using the determined channel factors is better than that of the joint detection in the prior art. Referring to FIG. 2, a performance curve 1, a performance curve 2, and a performance curve 3 indicate the performance in the prior art, and a performance curve 1', a performance curve 2', and a performance curve 3' indicate the performance according to the present invention. The performance curves 1 and 1' indicate effect comparison when the power bias is that a power of a user A is 10 db higher than a power of a user B, the performance curves 2 and 2' indicate effect comparison without a power bias, and the performance curves 3 and 3' indicate effect comparison when the power bias is that the power of the user A is 10 db lower than the power of the user B. As can be seen from FIG. 2, although the performance curves 1 and 2 can satisfy the Quality of Service (QoS) requirements, but the performance becomes poor, and the performance curve 3 is far from satisfying the QoS requirements.

The embodiments of the present invention may be implemented by software, and corresponding software programs may be stored in readable storage media, such as a hard disk, cache or optical disk of a computer.

The above descriptions are merely some exemplary embodiments of the present invention, but not intended to limit the scope of the present invention. Any modification, equivalent replacement, or improvement made without departing from the spirit and principle of the present invention should fall within the scope of the present invention.

**Claims**

1.  A method for joint channel estimation and frame synchronization information detection, comprising:

    shifting a received signal at least once in a preset range and based on a preset reference position;

    multiplying $\left(\mathbf{A}_t^H \mathbf{A}_t\right)^{-1} \mathbf{A}_t^H$ by the received signal and the shifted received signal respectively to obtain at least two groups of channel factors, wherein $\mathbf{A}_t$ is a matrix obtained by sequencing pilot segment information bits, $(\cdot)^H$ denotes a complex conjugate transpose, and $(\cdot)^{-1}$ denotes an inverse matrix; and
    calculating receiving antenna information according to the at least two groups of channel factors, determining frame synchronization information according to the receiving antenna information, and selecting a group of channel factors which corresponds to the frame synchronization information.

2.  The method for joint channel estimation and frame synchronization information detection according to claim 1, wherein the $\mathbf{A}_t$ satisfies the following equation:

$$\mathbf{A}_t = \begin{bmatrix} \mathbf{A}_{t,0} & \mathbf{0} & \cdots & \mathbf{0} & \mathbf{A}_{t+\Delta t_1,1} & \mathbf{0} & \cdots & \mathbf{0} & \mathbf{A}_{t+\Delta t_{N-1},N-1} & \mathbf{0} & \cdots & \mathbf{0} \\ \mathbf{0} & \mathbf{A}_{t,0} & \cdots & \mathbf{0} & \mathbf{0} & \mathbf{A}_{t+\Delta t_1,1} & \cdots & \mathbf{0} & \mathbf{0} & \mathbf{A}_{t+\Delta t_{N-1},N-1} & \cdots & \mathbf{0} \\ & \vdots & \vdots & & & \vdots & \vdots & & & \vdots & \vdots & \\ \mathbf{0} & \mathbf{0} & \cdots & \mathbf{A}_{t,0} & \mathbf{0} & \mathbf{0} & \cdots & \mathbf{A}_{t+\Delta t_1,1} & \mathbf{0} & \mathbf{0} & \cdots & \mathbf{A}_{t+\Delta t_{N-1},N-1} \end{bmatrix}_{M \times (M \times N)}$$

    wherein M is a number of receiving antennas (M≥1), N is a number of users (N≥1), t+Δ$t$ is an arrival time of the received signal of each user, and Δ$t$ is a time difference between the arrival time of the received signals of users.

3.  The method for joint channel estimation and frame synchronization information detection according to claim 1, wherein the calculating receiving antenna information according to the at least two groups of channel factors, determining frame synchronization information according to the receiving antenna information, and selecting a group of channel factors which corresponds to the frame synchronization information comprise:

    at the shifted positions, calculating signal-to-noise ratios (SNRs) on receiving antennas according to the at least two groups of channel factors, determining the frame synchronization information according to the SNRs, and selecting a group of channel factors which corresponds to the frame synchronization information.

4.  The method for joint channel estimation and frame synchronization information detection according to claim 3, wherein, at the shifted positions, the calculating SNRs on receiving antennas according to the at least two groups of channel factors and determining the frame synchronization information according to the SNRs comprise:

at the shifted positions, calculating a sum of SNRs on at least two receiving antennas of M receiving antennas according to the at least two groups of channel factors to obtain multiple sums of SNRs, wherein M≥2; and determining the shifted position corresponding to the maximum sum of SNRs among the multiple sums of SNRs as the frame synchronization information.

5. The method for joint channel estimation and frame synchronization information detection according to claim 3, wherein, at the shifted positions, the calculating SNRs on receiving antennas according to the at least two groups of channel factors and determining the frame synchronization information according to the SNRs comprise:

at the shifted positions, calculating the SNRs of at least one receiving antenna of M receiving antennas according to the at least two groups of channel factors to obtain multiple SNRs, wherein M≥1; and determining the shifted position corresponding to the maximum SNR among the multiple SNRs as the frame synchronization information.

6. The method for joint channel estimation and frame synchronization information detection according to claim 1, wherein the calculating receiving antenna information according to the at least two groups of channel factors, determining frame synchronization information according to the receiving antenna information, and selecting a group of channel factors which corresponds to the frame synchronization information comprise:

at the shifted positions, calculating an energy on the receiving antenna according to the at least two groups of channel factors, determining the frame synchronization information according to the energy, and selecting a group of channel factors which corresponds to the frame synchronization information.

7. The method for joint channel estimation and frame synchronization information detection according to claim 6, wherein, at the shifted positions, the calculating the energy on receiving antennas according to the at least two groups of channel factors and determining the frame synchronization information according to the energy comprise:

at the shifted positions, calculating a sum of energies on at least two receiving antennas of M receiving antennas according to the at least two groups of channel factors to obtain multiple sums of energies, wherein M≥2; and determining the shifted position corresponding to the maximum sum of energies among the multiple sums of energies as the frame synchronization information.

8. The method for joint channel estimation and frame synchronization information detection according to claim 6, wherein, at the shifted positions, the calculating the energy on the receiving antenna according to the at least two groups of channel factors and determining the frame synchronization information according to the energy comprise:

at the shifted positions, calculating the energy on at least one receiving antenna of M receiving antennas according to the at least two groups of channel factors to obtain multiple energies, wherein M≥1; and determining the shifted position corresponding to the maximum energy among the multiple energies as the frame synchronization information.

9. A device for joint channel estimation and frame synchronization information detection, comprising:

a shifting module, configured to shift a received signal at least once in a preset range and based on a preset reference position;

a calculation module, configured to multiply $\left( \mathbf{A}_t^H \mathbf{A}_t \right)^{-1} \mathbf{A}_t^H$ by the received signal and the received signal shifted by the shifting module respectively to obtain at least two groups of channel factors, wherein $\mathbf{A}_t$ is a matrix obtained by sequencing pilot segment information bits, $(\cdot)^H$ denotes a complex conjugate transpose, and $(\cdot)^{-1}$ denotes an inverse matrix; and
a selection module, configured to calculate receiving antenna information according to the at least two groups of channel factors, determine frame synchronization information according to the receiving antenna information, and select a group of channel factors which corresponds to the frame synchronization information.

10. The method for joint channel estimation and frame synchronization information detection according to claim 9,

wherein the $\mathbf{A}_t$ satisfies the following equation:

$$\mathbf{A}_t = \begin{bmatrix} \mathbf{A}_{t,0} & \mathbf{0} & \cdots & \mathbf{0} & \mathbf{A}_{t+\Delta t_1,1} & \mathbf{0} & \cdots & \mathbf{0} & \mathbf{A}_{t+\Delta t_{N-1},N-1} & \mathbf{0} & \cdots & \mathbf{0} \\ \mathbf{0} & \mathbf{A}_{t,0} & \cdots & \mathbf{0} & \mathbf{0} & \mathbf{A}_{t+\Delta t_1,1} & \cdots & \mathbf{0} & \mathbf{0} & \mathbf{A}_{t+\Delta t_{N-1},N-1} & \cdots & \mathbf{0} \\ & \vdots & \vdots & & & \vdots & \vdots & & & \vdots & \vdots & \\ \mathbf{0} & \mathbf{0} & \cdots & \mathbf{A}_{t,0} & \mathbf{0} & \mathbf{0} & \cdots & \mathbf{A}_{t+\Delta t_1,1} & \mathbf{0} & \mathbf{0} & \cdots & \mathbf{A}_{t+\Delta t_{N-1},N-1} \end{bmatrix}_{M\times(M\times N)}$$

M is a number of receiving antennas (M≥1), N is a number of users (N≥1), t+$\Delta t$ is an arrival time, and $\Delta t$ is a time difference between the arrival time.

11. The device for joint channel estimation and frame synchronization information detection according to claim 9, wherein the selection module comprises:

   a first determination unit, configured to, at the shifted positions, calculate SNRs on receiving antennas according to the at least two groups of channel factors and determine the frame synchronization information according to the SNRs; and
   a first selection unit, configured to select a group of channel factors which corresponds to the frame synchronization information determined by the first determination unit.

12. The device for joint channel estimation and frame synchronization information detection according to claim 11, wherein the first determination unit comprises:

   a first calculation subunit, configured to, at the shifted positions, calculate, a sum of SNRs of at least two receiving antennas of M receiving antennas according to the at least two groups of channel factors to obtain multiple sums of SNRs, wherein M≥2; and
   a first determination subunit, configured to determine the shifted position corresponding to the maximum sum of SNRs among the multiple sums of SNRs obtained by the first calculation subunit as the frame synchronization information.

13. The device for joint channel estimation and frame synchronization information detection according to claim 11, wherein the first determination unit comprises:

   a second calculation subunit, configured to, at the shifted positions, calculate the SNRs on at least one receiving antenna of M receiving antennas according to the at least two groups of channel factors to obtain multiple SNRs, wherein M≥1; and
   a second determination subunit, configured to determine the shifted position corresponding to the maximum SNR among the multiple SNRs obtained by the second calculation subunit as the frame synchronization information.

14. The device for joint channel estimation and frame synchronization information detection according to claim 9, wherein the selection module comprises:

   a second determination unit, configured to, at the shifted positions, calculate an energy on the receiving antenna according to the at least two groups of channel factors and determine the frame synchronization information according to the energy; and
   a second selection unit, configured to select a group of channel factors which corresponds to the frame synchronization information determined by the second determination unit.

15. The device for joint channel estimation and frame synchronization information detection according to claim 14, wherein the second determination unit comprises:

   a third calculation subunit, configured to, at the shifted positions, calculate a sum of energies on at least two receiving antennas of M receiving antennas according to the at least two groups of channel factors to obtain multiple sums of energies, wherein M≥2; and

a third determination subunit, configured to determine the shifted position corresponding to the maximum sum of energies among the multiple sums of energies obtained by the third calculation subunit as the frame synchronization information.

16. The device for joint channel estimation and frame synchronization information detection according to claim 14, wherein the second determination unit comprises:

a fourth calculation subunit, configured to, at the shifted positions, calculate the energy on at least one receiving antenna of M receiving antennas according to the at least two groups of channel factors to obtain multiple energies, wherein $M \geq 1$; and

a fourth determination subunit, configured to determine the shifted position corresponding to the maximum energy among the multiple energies obtained by the fourth calculation subunit as the frame synchronization information.

Shift a received signal at least once in a preset range and based on a preset reference position 101

Multiply calculated $\left( A_t^H A_t \right)^{-1} A_t^H$ by the received signal and the shifted received signal respectively to obtain at least two groups of channel factors 102

Calculate receiving antenna information according to the at least two groups of channel factors, determine frame synchronization information according to the receiving antenna information, and select a group of channel factors which corresponds to the frame synchronization information 103

FIG. 1

FIG. 2

301

302

303

| Shifting module | → | Calculation module | → | Selection module |

FIG. 3

# INTERNATIONAL SEARCH REPORT

| | |
|---|---|
| International application No. | |
| | PCT/CN2009/074936 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC: H04B; H04L; H04W; H04Q

Documentation searched other than minimum documentation to the extent that such documents are included in the fields searched

Electronic data base consulted during the international search (name of data base and, where practicable, search terms used)

IEEE, CNKI, CNPAT, WPI, EPODOC; keywords: channel estimation factor offset shift delay synchronization antenna least squared

**C. DOCUMENTS CONSIDERED TO BE RELEVANT**

| Category* | Citation of document, with indication, where appropriate, of the relevant passages | Relevant to claim No. |
|---|---|---|
| PX | CN 101404516 A (HUAWEI TECHNOLOGIES CO., LTD.) 08 Apr.2009(08.04.2009) The whole document | 1-16 |
| A | CN 1571325 A (ZTE CORP.) 26 Jan.2005(26.01.2005) The whole document | 1-16 |
| A | WO 02/103972 A1(TELEFONAKTIEBOLAGET L M ERICSSON) 27 Dec.2002(27.12.2002) The whole document | 1-16 |
| A | 3GPP TSG GERAN#40 TDoc GP-081500, 12 Nov.2008(12.11.2008) The whole document | 1-16 |

☒ Further documents are listed in the continuation of Box C.  ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13 Jan.2010 (13.01.2010) | **25 Feb. 2010 (25.02.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LIU,Feng** Telephone No. (86-10)**62413627** |

Form PCT/ISA /210 (second sheet) (July 2009)

EP 2 360 845 A1

# INTERNATIONAL SEARCH REPORT

International application No.

PCT/CN2009/074936

C (Continuation).     DOCUMENTS CONSIDERED TO BE RELEVANT

| Category* | Citation of document, with indication, where appropriate, of the relevant passages | Relevant to claim No. |
|---|---|---|
| A | 3GPP TSG GERAN#36 Tdoc GP-072033, 16 Nov.2007(16.11.2007)<br>The whole document | 1-16 |

Form PCT/ISA /210 (continuation of second sheet ) (July 2009)

16

**INTERNATIONAL SEARCH REPORT**
Information on patent family members

| International application No. |
| --- |
| PCT/CN2009/074936 |

| Patent Documents referred in the Report | Publication Date | Patent Family | Publication Date |
| --- | --- | --- | --- |
| CN 101404516 A | 08.04.2009 | NONE | |
| CN 1571325 A | 26.01.2005 | NONE | |
| WO 02/103972 A1 | 27.12.2002 | US 2003021359 A1 | 30.01.2003 |
| | | EP 1393513 A1 | 03.03.2004 |
| | | AU 2002319241 A1 | 02.01.2003 |
| | | DE 60221823 E | 27.09.2007 |

Form PCT/ISA /210 (patent family annex) (July 2009)

## INTERNATIONAL SEARCH REPORT

International application No.

PCT/CN2009/074936

**CLASSIFICATION OF SUBJECT MATTER**

H04B1/707 (2006.01) i
H04L25/02 (2006.01) i
H04L25/03 (2006.01) i